# FASCICULE DE BREVET EUROPEEN

(11) **EP 0 539 789 B1**
(45) Date de publication et mention de la délivrance du brevet: **12.07.1995**
(21) Numéro de dépôt: 92117400.9
(22) Date de dépôt: 12.10.1992
(51) Int. Cl.: B01J 47/02, D06F 75/14

(54) **Cartouche amovible de déminéralisation**
Ausnehmbare Entmineralisierungshülse
Removable demineralization cartridge

(30) Priorité: 31.10.1991 FR 9113497
(43) Date de publication de la demande: 05.05.1993
(73) Titulaire: MOULINEX, F-93170 Bagnolet (FR)
(72) Inventeur: Guillot, Gérard Louis Henri, F-61250 Radon (FR); Fourny, Jacky René Paul, F-72610 Berus (FR)
(74) Mandataire: May, Hans Ulrich, Dr.

(56) Documents cités:
- EP-A- 0 306 623
- EP-A- 0 401 535
- FR-A- 2 648 163
- FR-A- 2 663 052
- US-A- 2 935 194

## Description

L'invention concerne des cartouches amovibles de déminéralisation contenant des résines de déminéralisation d'un liquide, en l'occurrence de l'eau, et plus particulièrement la visualisation de la saturation desdites résines.

Une cartouche amovible de déminéralisation destinée à être montée dans un circuit d'eau d'un appareil comprend une chambre qui comporte un premier orifice connecté à un réservoir de liquide et un deuxième orifice par lequel le liquide s'écoule après une circulation dans ladite cartouche, et qui contient une résine de déminéralisation du liquide ainsi qu'un moyen de changement d'état indiquant la saturation de ladite résine après un temps déterminé d'utilisation, ladite chambre possédant une paroi périphérique comportant une partie transparente pour permettre à un utilisateur de constater un changement de couleur du moyen de changement d'état lorsque la résine est saturée.

Pour un utilisateur, ledit changement de couleur n'est pas toujours évident car il est progressif. L'utilisateur ne sait pas vraiment à quel moment il doit changer ladite cartouche de déminéralisation, ce qui remet en cause l'utilité d'une telle cartouche notamment lorsqu'elle est utilisée sur un dispositif de repassage tel qu'un fer à vapeur où l'entartrage a lieu rapidement.

Le but de l'invention est de remédier à l'inconvénient précité en mettant en oeuvre une cartouche amovible de déminéralisation équipée d'un moyen de détection de saturation de la résine, facile à visualiser.

Selon l'invention, la partie transparente comporte deux fenêtres juxtaposées et un voile de séparation agencé entre le premier orifice et le deuxième orifice, dont une extrémité aboutissant à la partie transparente entre les deux fenêtres et dont l'autre extrémité libre séparée de la paroi périphérique délimite, pour le liquide, un chemin d'une certaine longueur de manière à permettre la comparaison entre la couleur située dans une région voisine du premier orifice et celle située dans la région voisine du deuxième orifice.

Grâce à la cartouche selon l'invention, l'utilisateur visualise, d'une part, le changement de couleur progressif du réactif et, d'autre part, détermine avec précision le moment où il doit changer ladite cartouche, c'est-à-dire lorsque la résine est complètement saturée. En effet, la structure de la cartouche amovible de déminéralisation est conçue de manière à permettre d'apprécier le changement de couleur par comparaison. Après le passage d'une certaine quantité de liquide dans la cartouche, la couleur apparaissant à la première fenêtre est comparée à la couleur apparaissant à la deuxième fenêtre. Si les deux couleurs sont semblables, la résine de la cartouche est saturée et la cartouche doit être changée.

Les caractéristiques et avantages de l'invention ressortiront d'ailleurs de la description qui va suivre, à titre d'exemple non limitatif, en référence aux dessins annexés dans lesquels :

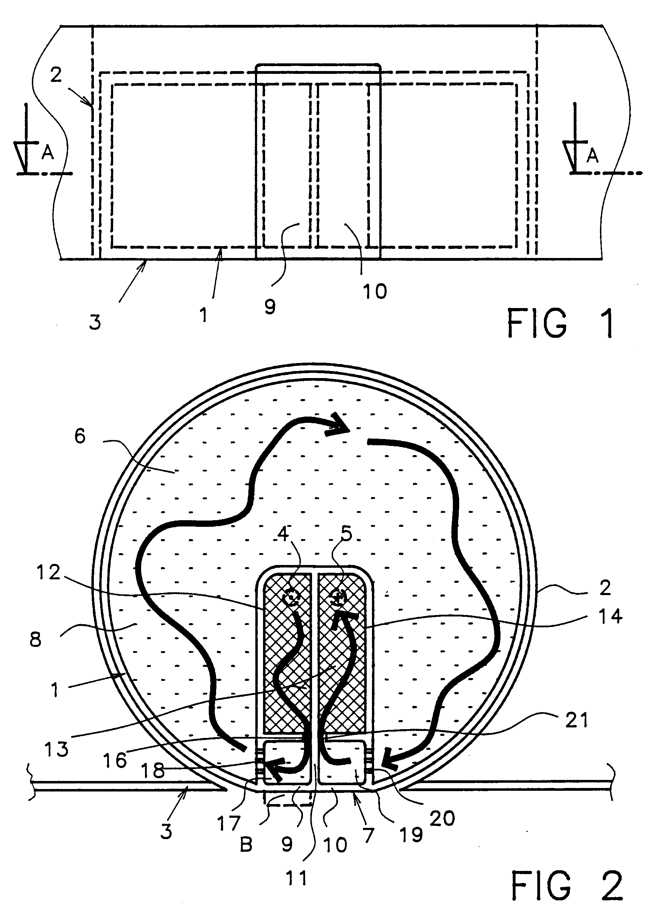

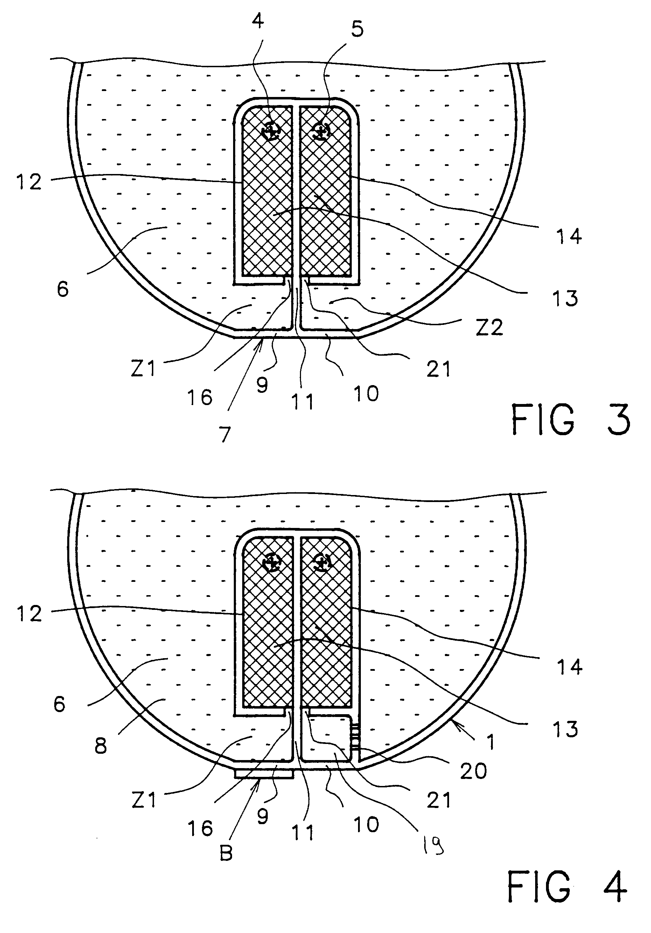

la figure 1 représente une cartouche amovible selon l'invention montée sur un dispositif de repassage ; la figure 2 représente une coupe horizontale selon la ligne AA de la cartouche amovible représentée à la figure 1 et selon un premier mode de réalisation ; la figure 3 représente une coupe partielle horizontale selon la ligne AA de la cartouche amovible représentée à la figure 1 et selon un deuxième mode de réalisation ; la figure 4 représente une coupe partielle horizontale selon la ligne AA de la cartouche amovible représentée à la figure 1 et selon un troisième de mode de réalisation.

Selon les figures 1 et 2, une cartouche amovible 1 de déminéralisation est fixée, par des moyens de fixation non représentés, dans un emplacement 2 d'une carrosserie 3 d'un dispositif de repassage comportant un réservoir d'eau d'alimentation d'une chambre à vapeur d'un fer à repasser. La cartouche amovible 1 comprend un premier orifice 4 connecté à un réservoir de liquide (non représenté) en l'occurrence de l'eau et un deuxième orifice 5 par lequel le liquide s'écoule, après une circulation dans ladite cartouche. La cartouche amovible 1 possède également une chambre 6, par exemple de forme générale circulaire. La chambre 6 comporte, par exemple, sur sa périphérie, une partie transparente 7 et contient une résine de déminéralisation 8 ainsi qu'un moyen de changement d'état, par exemple par changement de couleur tel qu'un réactif, indiquant la saturation de la résine après un temps déterminé d'utilisation. Ladite partie transparente 7 est, par exemple, plate et située dans le même plan que le bord extérieur du réservoir indépendant 3.

Dans un exemple particulier de réalisation représenté à la figure 2, la partie transparente 7 comporte deux fenêtres juxtaposées 9 et 10 et positionnées dans le même plan que ladite portion 7. La partie transparente 7 comporte également un voile de séparation 11 agencé entre le premier orifice 4 et le deuxième orifice 5. Ledit voile de séparation 11 aboutit à la partie transparente 7 entre les deux fenêtres juxtaposées 9 et 10. Ce voile 11 délimite, pour l'eau, des chemins d'une certaine longueur dont l'un est représenté par des flèches sur la figure 2. L'extrémité libre du voile de séparation 11 est conformée en chicane et délimite deux compartiments 12 et 14 qui contiennent chacun une mousse synthétique 13 de retenue des impuretés et dans lesquels aboutissent respectivement les premier et deuxième orifices 4 et 5 qui sont mis en communication par une première ouverture 16 dudit premier compartiment 12 débouchant sur une première case 17 dont l'un des côté constitue la première fenêtre 9, une deuxième ouverture 18 de ladite première case 17 débouchant sur ladite chambre 6 qui communique, par une troisième ouverture 20, avec une deuxième case 19 dont l'un des côtés constitue la deuxième fenêtre 10, la dite deuxième case 19 communiquant avec le deuxième compartiment 14 par une quatrième ouverture 21. La première case 17 et la deuxième case 19 contiennent chacune un réactif du même type, par exemple un réactif chimique, constituant le moyen de changement d'état. Au cours de l'utilisation du dispositif de repassage, le réactif chimique contenu dans les deux cases change progressivement de couleur. Le réactif de la première case 17 situé en amont prend donc une couleur fixe après un temps déterminé d'utilisation. Le même réactif contenu dans la deuxième case 19 change également de couleur mais de façon moins rapide du fait de sa localisation avale. Une comparaison de couleur entre la fenêtre 10 de la deuxième case 19 et la fenêtre 9 de la première case 17 est effectuée. Lorsque la couleur de la fenêtre 10 de la deuxième case 19 est identique à la couleur de la fenêtre 9 de la première case 17, on en conclut que la résine de la cartouche amovible est saturée, et que cette cartouche amovible 1 doit être changée.

Dans un autre exemple de réalisation, il est possible de substituer au réactif de la première case 17 une bande de couleur déterminée B (représentée en traits interrompus sur la figure 2) et apposée sur la face extérieure de la première fenêtre 9 de la partie transparente 7 de la cartouche amovible 1. La couleur de la bande B correspond à la couleur du réactif obtenu après le passage d'une quantité déterminée d'eau. La bande de couleur B est comparée à la couleur du réactif placé dans la deuxième case 19. Lorsque la couleur de la fenêtre 10 de la deuxième case 19 est identique à la bande de couleur B apposée sur la fenêtre 9, on en conclut que la résine est saturée et que la cartouche amovible doit être changée.

Dans un autre exemple de réalisation représenté à la figure 3 et dans lequel on a gardé les mêmes références pour les parties similaires à celles de la figure 1, l'extrémité libre du voile de séparation 11 est conformée en chicane et délimite deux compartiments 12 et 14 qui contiennent chacun une mousse synthétique 13 et dans lesquels aboutissent respectivement les premier et deuxième orifice 4 et 5, qui sont mis en communication par une première ouverture 16 dudit premier compartiment 12 débouchant sur ladite chambre 6 dans une première zone Z₁ située entre la première fenêtre 9 et ledit premier compartiment 12, et ladite chambre 6 communiquant avec le deuxième compartiment 14 par une deuxième ouverture 21 débouchant dans une deuxième zone Z₂ située entre la deuxième fenêtre 10 et ledit deuxième compartiment 14.

Le réactif constituant le moyen de changement d'état est mélangé avec la résine à l'intérieur de la cartouche. Après un certain temps d'utilisation, le réactif change de couleur. Une comparaison de la couleur apparaissant sur les fenêtres 9 et 10 est effectuée. Le changement de couleur du réactif apparaît plus rapidement à la première fenêtre 9 qu'à la deuxième fenêtre 10 du fait de sa localisation. Lorsque les deux couleurs sont identiques sur les deux fenêtres, la résine est saturée et la cartouche amovible de déminéralisation 1 doit être changée.

Dans un autre mode de réalisation, représenté à la figure 4, et dans lequel on a gardé les mêmes références pour les parties similaires à celles de la figure 1 l'extrémité libre du voile de séparation 11 est conformée en chicane et délimite deux compartiments 12 et 14 qui contiennent chacun une mousse synthétique 13 et dans lesquels aboutissent respectivement les premier et deuxième orifices 4 et 5, qui sont mis en communication par une première ouverture 16 dudit premier compartiment 12 débouchant sur ladite chambre 6 dans une première zone Z₁ située entre la première fenêtre 9 et ledit premier compartiment 12, la chambre 6 communiquant par une troisième ouverture 20, avec une deuxième case 19 dont l'un des côtés constitue la deuxième fenêtre 10, la deuxième case communiquant avec le deuxième compartiment par une quatrième ouverture 21.

Une bande de couleur B est apposée sur la face extérieure de la première fenêtre 9 et un réactif constituant le moyen de changement d'état est positionné dans la deuxième case 19. Après un certain temps d'utilisation, le réactif de la deuxième case 19 change progressivement de couleur. Lorsque la couleur apparaissant à la deuxième fenêtre 10 est identique à la couleur de la bande de couleur B apposée sur la première fenêtre 9, la résine de la cartouche amovible 1 est saturée et la cartouche 1 doit être changée.

L'invention peut s'appliquer également sur tous les circuits d'eau comportant des cartouches de déminéralisation tels que filtration de l'eau de boisson et filtration de l'eau des aquariums.

## Revendications

1. Cartouche amovible (1) de déminéralisation destinée à être montée dans un circuit d'eau d'un appareil (3) et comprenant une chambre qui comporte un premier orifice (4) connecté à un réservoir de liquide et un deuxième orifice (5) par lequel le liquide s'écoule, après une circulation dans ladite cartouche, et qui contient une résine de déminéralisation (8) du liquide ainsi qu'un moyen de changement d'état indiquant la saturation de ladite résine après un temps déterminé d'utilisation, ladite chambre possédant une paroi périphérique comportant une partie transparente (7) pour permettre à un utilisateur de constater un changement de couleur du moyen de changement d'état lorsque la résine (8) est saturée,
**caractérisée en ce que** la partie transparente (7) comporte deux fenêtres juxtaposées (9 et 10) et un voile de séparation (11) agencé entre le premier orifice (4) et le deuxième orifice (5), dont une extrémité aboutit à la partie transparente (7) entre les deux fenêtres (9 et 10) et, dont l'autre extrémité libre séparée de la paroi périphérique délimite, pour le liquide, un chemin d'une certaine longueur de manière à permettre la comparaison entre la couleur située dans une région voisine du premier orifice (4) et celle située dans la région voisine du deuxième orifice (5).

2. Cartouche amovible de déminéralisation selon la revendication 1,
**caractérisée en ce que** l'extrémité libre du voile de séparation (11) est conformée en chicane et délimite deux compartiments (12 et 14) qui contiennent chacun une mousse synthétique (13) et dans lesquels aboutissent respectivement les premier et deuxième orifices (4 et 5), qui sont mis en communication par une première ouverture (16) dudit premier compartiment (12) débouchant sur une première case (17) dont l'un des côté constitue la première fenêtre (9), une deuxième ouverture (18) de ladite première case (17) débouchant sur ladite chambre (6) qui communique, par une troisième ouverture (20), avec une deuxième case (19) dont l'un des côtés constitue la deuxième fenêtre (10), la dite deuxième case (19) communiquant avec le deuxième compartiment (14) par une quatrième ouverture (21).

3. Cartouche amovible de déminéralisation selon la revendication 2,
**caractérisée en ce que** la première case (17) et la deuxième case (19) contiennent un réactif chimique constituant le moyen de changement d'état.

4. Cartouche amovible de déminéralisation selon la revendication 2,
**caractérisée en ce que** la première case (17) comporte une bande de couleur apposée sur la face extérieure de la première fenêtre (9) et servant de témoin et la deuxième case (19) contient un réactif constituant le moyen de changement d'état.

5. Cartouche amovible de déminéralisation selon la revendication 1,
**caractérisée en ce que** l'extrémité libre du voile de séparation (11) est conformée en chicane et délimite deux compartiments (12 et 14) qui contiennent une mousse synthétique (13) et dans lesquels aboutissent respectivement les premier et deuxième orifices (4 et 5), qui sont mis en communication par une première ouverture (16) dudit premier compartiment (12) débouchant sur ladite chambre (6) dans une première zone (Z₁) située entre la première fenêtre (9) et ledit premier compartiment (12), et ladite chambre (6) communiquant avec le deuxième compartiment (14) par une deuxième ouverture (21) débouchant dans une deuxième zone (Z₂) située entre la deuxième fenêtre (10) et ledit deuxième compartiment (14).

6. Cartouche amovible de déminéralisation selon la revendication 5,
**caractérisée en ce que** le moyen de changement d'état est un réactif chimique mélangé avec la résine de déminéralisation (8).

7. Cartouche amovible de déminéralisation selon la revendication 1,
**caractérisée en ce que** l'extrémité libre du voile de séparation (11) est conformée en chicane et délimite deux compartiments (12 et 14) qui contiennent une mousse synthétique (13) et dans lesquels aboutissent respectivement les premier et deuxième orifices (4 et 5), une première ouverture (16) dudit premier compartiment (12) débouchant sur ladite chambre (6) dans une première zone Z₁, située entre la première fenêtre (9) et ledit premier compartiment (12), la chambre (6) communiquant, par une troisième ouverture (20), avec une deuxième case (19) dont l'un des côtés constitue la deuxième fenêtre (10), et la dite deuxième case (19) communiquant avec le deuxième compartiment (14) par une quatrième ouverture (21).

8. Cartouche amovible de déminéralisation selon la revendication 7,
**caractérisée en ce que** la première fenêtre (9) comporte, sur sa face extérieure, une bande de couleur (B) servant de témoin et la deuxième case (19) contient un réactif constituant le moyen de changement d'état.

9. Cartouche amovible de déminéralisation selon l'une quelconque des revendications précédentes,
**caractérisée en ce que** cette cartouche est destinée à être montée sur un dispositif de repassage comportant un réservoir d'eau d'alimentation d'une chambre à vapeur d'un fer à repasser.

## Claims

1. Removable demineralization cartridge (1) designed to be mounted in the water circuit of an appliance (3) and comprising a chamber which has a first orifice (4) connected to a reservoir of liquid and a second orifice (5) through which the liquid flows out after circulating inside the said cartridge, and which contains a liquid-demineralization resin (8) and a state-changing means indicating the saturation of the said resin after a given utilization time, the said chamber having a peripheral wall with a transparent part (7) for enabling a user to note a change in the colour of the state-changing means when the resin (8) is saturated, characterised in that the transparent part (7) has two juxtaposed windows (9 and 10) and a separating partition (11) arranged between the first orifice (4) and the second orifice (5), one end of which ends at the transparent part (7) between the two windows (9 and 10) and the other, free, end of which, separated from the peripheral wall, defines, for the liquid, a path of a certain length, so as to allow comparison between the colour situated in an area close to the first orifice (4) and that situated in the area close to the second orifice (5).

2. Removable demineralization cartridge according to Claim 1, characterised in that the free end of the separating partition (11) is shaped like a baffle and defines two compartments (12 and 14), each of which contains a synthetic foam (13) and into which open respectively the first and second orifices (4 and 5), which are put in communication through a first opening (16) in the said first compartment (12) opening onto a first cell (17), one of whose sides constitutes the first window (9), a second opening (18) in the said first cell (17) opening onto the said chamber (6) which communicates, through a third opening (20), with a second cell (19), one of whose sides constitutes the second window (10), the said second cell (19) communicating with the second compartment (14) through a fourth opening (21).

3. Removable demineralization cartridge according to Claim 2, characterised in that the first cell (17) and the second cell (19) contain a chemical reagent constituting the state-changing means.

4. Removable demineralization cartridge according to Claim 2, characterised in that the first cell (17) has a coloured strip fixed to the external face of the first window (9), serving as a reference, and the second cell (19) contains a reagent constituting the state-changing means.

5. Removable demineralization cartridge according to Claim 1, characterised in that the free end of the separating partition (11) is shaped like a baffle and defines two compartments (12 and 14), which contain a synthetic foam (13) and into which open respectively the first and second orifices (4 and 5), which are put in communication through a first opening (16) in the said first compartment (12) opening onto the said chamber (6) in a first area (Z₁) situated between the first window (9) and the said first compartment (12), and the said chamber (6) communicating with the second compartment (14) through a second opening (21) opening into a second area (Z₂) situated between the second window (10) and the said second compartment (14).

6. Removable demineralization cartridge according to Claim 5, characterised in that the state-changing means is a chemical reagent mixed with the demineralization resin (8).

7. Removable demineralization cartridge according to Claim 1, characterised in that the free end of the separating partition (11) is shaped like a baffle and defines two compartments (12 and 14), which contain a synthetic foam (13) and into which open respectively the first and second orifices (4 and 5), a first opening (16) in the said first compartment (12) opening onto the said chamber (6) in a first area Z₁ situated between the first window (9) and the said first compartment (12), the chamber (6) communicating through a third opening (20) with a second cell (19), one of whose sides constitutes the second window (10), the said second cell (19) communicating with the second compartment (14) through a fourth opening (21).

8. Removable demineralization cartridge according to Claim 7, characterised in that the first window (9) has, on its external face, a coloured strip (B) serving as a reference and the second cell (19) contains a reagent constituting the state-changing means.

9. Removable demineralization cartridge according to any one of the preceding claims, characterised in that this cartridge is designed to be mounted on an ironing device including a water reservoir supplying the steam chamber of an iron.

## Patentansprüche

1. Abnehmbare Entmineralisierungspatrone (1), die zum Anbringen in einem Wasserkreislauf eines Gerätes (3) bestimmt ist und eine Kammer umfaßt, die eine erste Öffnung (4), die mit einem Flüssigkeitsbehälter verbunden ist, sowie eine zweite Öffnung (5) aufweist, durch die die Flüssigkeit nach einem Umlauf in der Patrone abläuft und die ein Entmineralisierungsharz (8) für die Flüssigkeit sowie ein Zustandsänderungsmittel enthält, das die Sättigung des Harzes nach einer bestimmten Verwendungszeit angibt, wobei die Kammer eine Umfangswand besitzt, die einen transparenten Teil (7) umfaßt, um es einem Benutzer zu ermöglichen, eine Farbänderung des Zustandsänderungsmittels festzustellen, wenn das Harz (8) gesättigt ist,
**dadurch gekennzeichnet, daß** der transparente Teil (7) zwei nebeneinander angeordnete Fenster (9 und 10) sowie einen Trennschirm (11) aufweist, der zwischen der ersten Öffnung (4) und der zweiten Öffnung (5) angeordnet ist und von dem ein Ende zu dem transparenten Teil (7) zwischen den beiden Fenstern (9 und 10) führt und von dem das von der Umfangswand getrennte, freie Ende für die Flüssigkeit derart einen Weg mit einer bestimmten Länge abgrenzt, daß der Vergleich zwischen der Farbe in einem Bereich in der Nähe der ersten Öffnung (4) und derjenigen in dem Bereich in der Nähe der zweiten Öffnung (5) ermöglicht wird.

2. Abnehmbare Entmineralisierungspatrone nach Anspruch 1, **dadurch gekennzeichnet, daß** das freie Ende des Trennschirms (11) als Ablenkplatte geformt ist und zwei Abteile (12 und 14) abgrenzt, die jeweils einen Schaumstoff (13) enthalten und in die die erste bzw. die zweite Öffnung (4 und 5) führen, die durch eine erste Öffnung (16) des ersten Abteils (12) in Verbindung gebracht sind, die an einem ersten Fach (17) mündet, von dem eine Seite das erste Fenster (9) bildet, wobei eine zweite Öffnung (18) des ersten Fachs (17) an der Kammer (6) mündet, die über eine dritte Öffnung (20) mit einem zweiten Fach (19) in Verbindung steht, von dem eine Seite das zweite Fenster (10) bildet, wobei das zweite Fach (19) mit dem zweiten Abteil (14) über eine vierte Öffnung (21) in Verbindung steht.

3. Abnehmbare Entmineralisierungspatrone nach Anspruch 2, **dadurch gekennzeichnet, daß** das erste Fach (17) und das zweite Fach (19) ein chemisches Reagenz enthalten, das das Zustandsänderungsmittel bildet.

4. Abnehmbare Entmineralisierungspatrone nach Anspruch 2, **dadurch gekennzeichnet, daß** das erste Fach ein Farbband aufweist, das an der Außenseite des ersten Fensters (9) angebracht ist und als Vergleich dient, und das zweite Fach (19) ein Reagenz enthält, das das Zustandsänderungsmittel bildet.

5. Abnehmbare Entmineralisierungspatrone nach Anspruch 1, **dadurch gekennzeichnet, daß** das freie Ende des Trennschirms (11) als Ablenkplatte geformt ist und zwei Abteile (12 und 14) abgrenzt, die einen Schaumstoff (13) enthalten und in die die erste bzw. die zweite Öffnung (4 und 5) führen, die durch eine erste Öffnung (16) des ersten Abteils (12) in Verbindung gebracht sind, die an der Kammer (6) in einer ersten Zone (Z₁) zwischen dem ersten Fenster (9) und dem ersten Abteil (12) mündet, und wobei die Kammer (6) mit dem zweiten Abteil (14) über eine zweite Öffnung (21) in Verbindung steht, die in einer zweiten Zone (Z₂) zwischen dem zweiten Fenster (10) und dem zweiten Abteil (14) mündet.

6. Abnehmbare Entmineralisierungspatrone nach Anspruch 5, **dadurch gekennzeichnet, daß** das Zustandsänderungsmittel ein mit dem Entmineralisierungsharz (8) gemischtes chemisches Reagenz ist.

7. Abnehmbare Entmineralisierungspatrone nach Anspruch 1, **dadurch gekennzeichnet, daß** das freie Ende des Trennschirms (11) als Ablenkplatte geformt ist und zwei Abteile (12 und 14) abgrenzt, die einen Schaumstoff (13) enthalten und in die die erste bzw. die zweite Öffnung (4 und 5) führen, wobei eine erste Öffnung (16) des ersten Abteils (12) an der Kammer (6) in einer ersten Zone Z₁ zwischen dem ersten Fenster (9) und dem ersten Abteil (12) mündet, wobei die Kammer (6) über eine dritte Öffnung (20) mit einem zweiten Fach (19) in Verbindung steht, von dem eine Seite das zweite Fenster (10) bildet, und das zweite Fach (19) mit dem zweiten Abteil (14) über eine vierte Öffnung (21) in Verbindung steht.

8. Abnehmbare Entmineralisierungspatrone nach Anspruch 7, **dadurch gekennzeichnet, daß** das erste Fenster (9) an seiner Außenseite ein Farbband (B) aufweist, das als Vergleich dient, und das zweite Fach ein Reagenz enthält, das das Zustandsänderungsmittel bildet.

9. Abnehmbare Entmineralisierungspatrone nach einem der vorhergehenden Ansprüche,
**dadurch gekennzeichnet, daß** diese Patrone zum Anbringen an einer Bügelvorrichtung bestimmt ist, die einen Wasserbehälter zur Versorgung einer Dampfkammer eines Bügeleisens aufweist.
